# EUROPÄISCHE PATENTSCHRIFT

(11) **EP 1 000 534 B1**
(45) Veröffentlichungstag und Bekanntmachung des Hinweises auf die Patenterteilung: **07.03.2007**
(21) Anmeldenummer: 99121738.1
(22) Anmeldetag: 03.11.1999
(51) Int. Cl.: A01F 15/07

(54) **Rundballenpresse für landwirtschaftliches Erntegut**
Round baler for agricultural crop
Presse à balles rondes pour récolte agricole

(30) Priorität: 09.11.1998 DE 19851470
(43) Veröffentlichungstag der Anmeldung: 17.05.2000
(73) Patentinhaber: Welger Maschinenfabrik GmbH, 38304 Wolfenbüttel (DE)
(72) Erfinder: Rodewald, Peter, 38321 Neindorf (DE)

(56) Entgegenhaltungen:
- EP-A- 0 954 959
- DE-A- 19 810 074
- DE-U- 29 713 514

## Beschreibung

Die Erfindung betrifft eine Rundballenpresse für landwirtschaftliches Erntegut nach dem Oberbegriff des Anspruches 1.

Bei einer aus der DE 198 10 074 A1 bekannten Rundballenpresse wird ein variabler Preßraum einerseits durch eine einem Aufsammler nachgeschaltete, große Bodenwalze und zwei oberhalb des Aufsammlers ortsfest aber drehbar angeordnete Preßwalzen und andererseits von einem Förder- und Preßband gebildet, das über eine untere, zur Bodenwalze benachbarte Umlenkrolle und eine obere, zur oberen Preßwalze benachbarte Umlenkrolle so geführt ist, daß eine etwa dreieckförmige Ballenstartkammer entsteht. Zusätzlich zu einem Bandaufnahmemechanismus, der die bei wachsendem Ballendurchmesser benötigte Bandlänge freigibt, ist eine zusätzliche Bandspannvorrichtung in Form einer durch den wachsenden Ballen verschwenkbaren, oberhalb der oberen Preßwalze angeordneten Band-Umlenkrolle vorgesehen, die ohne komplexe Hebelarme oder aktivierende Federn die Spannung der Bänder zwischen der Startposition und der Endposition als Reaktion auf das Ballenwachstum erhöhen soll. Aufgrund der freien Schwenkbarkeit der Band-Umlenkrolle weicht diese bei momentan zu verarbeitendem unterschiedlichen Erntegutschwad und insbesondere bei Haufen schnell aus, so daß es zu Ballenbereichen unterschiedlicher Pressung und zu unrunden Ballen kommen kann. Der entscheidende Nachteil dieser Rundballenpresse liegt aber darin, daß die Bodenwalze und die in Drehrichtung erste Band-Umlenkwalze eine feste Zuordnung zueinander haben, die auf Ballen-Enddurchmeser ausgelegt ist, so daß in der Anfangsphase der Ballenbildung eine relativ große Übergangsstufe zwischen Bodenwalze und Ballen-Umlenkwalze besteht. Bei kleineren und mittleren Ballendurchmessem liegt diese Umlenkrolle dadurch auf einem größeren Radius in Bezug auf den Ballenradius und kann keine Verdichtungsarbeit leisten. Legt man die Umlenkrolle höher, so entsteht bei größeren Ballendurchmessem viel Walkarbeit, was Bröckelverluste und hohen Leistungsbedarf verursacht.

Aus der EP 0496 069 A1 ist eine Rundballenpresse mit wenigstens einer schwenkbeweglich gelagerten Umlenkrolle bekannt, die durch ein Stellglied einseitig ausgelenkt werden soll, um die Spannung des Förder- und Preßbandes über die gesamte Breite des Preßraumes gleichgroß zu machen.

Es ist Aufgabe der vorliegenden Erfindung, eine Rundballenpresse mit variablem Preßraum der eingangs genannten Art zu schaffen, dessen Übergangsbereiche Preßwalze zu Band-Umlenkrolle bei wachsendem Ballendurchmesser ständig in Idealpositionen sind und insbesondere Ballendurchmesservariationen in einer bisher nicht erreichten Bandbreite von 0.6 m bis 2 m Ballendurchmesser ohne Ballenungleichförmigkeiten oder Dichte- bzw. Leistungsnachteile ermöglichen.

Zur Lösung dieser Aufgabe zeichnet sich die Rundballenpresse der eingangs genannten Art durch die im kennzeichnenden Teil des Anspruches 1 angegebenen Merkmale aus. Hinsichtlich wesentlicher weiterer Ausgestaltungen wird auf die Ansprüche 2 bis 10 verwiesen.

Durch die Kopplung der Bewegung der Preßwalze bzw. der Band-Umlenkrolle an die Bewegung der Schwenkarmanordnung wird ermöglicht, daß sich diese ständig auf dem dem jeweiligen Ballendurchmesser entsprechenden Radius befinden, wodurch eine optimale Übergangsstelle zwischen Preßwalze und Förder- und Preßbahn geschaffen wird. Durch das ständig etwa tangential zum entstehenden Ballen gerichtete Walzenpaar sind gute Verdichtungen bei relativ geringem Leistungsbedarf erzielbar. Ballenungleichförmigkeiten durch Erntegutschwade unterschiedlicher Menge, Dicke und Zusammensetzung werden durch die zwangsläufige Steuerung ebenso vermieden wie erhöhte Rollwiderstände bei den bisher bekannten Anordnungen. Im Hinblick auf eine große Bandbreite der möglichen Ballendurchmesser sind nunmehr sowohl Ballendurchmesser von 0.6 m als auch von 2 m und mehr möglich.

Nach einer Ausgestaltung der Erfindung ist vorgesehen, daß die untere Umlenkrolle der Förder- und Preßbahn mit größer werdendem Ballendurchmesser relativ zur benachbarten Preßwalze von oben nach unten verstellt wird. Dadurch wird das Walzenpaar, das in der Startphase und auch während der Ballenbildung aufgrund der Verdichtungsarbeit von Bedeutung ist, variabel gestaltet.

In weiterer Ausgestaltung der Erfindung ist vorteilhafterweise auch die oberhalb der Zuführöffnung angeordnete Umlenkrolle der Förder- und Preßbahn mit größer werdendem Ballendurchmesser relativ zur Preßwalze von innen nach außen verstellbar, wodurch die Ballenpreßdichte erhöht und der Leistungsbedarf optimiert wird.

In kinematischer Umkehr kann anstelle einer Umlenkkrolle eine Preßwalze in entsprechend entgegengesetzte Richtung verstellt werden.

Eine besonders vorteilhafte Ausführungsform, die auf zusätzliche Lagerstellen verzichtet, besteht darin, daß die Umlenkrolle und die Preßwalze ortsfest aber drehbar im jeweiligen Gehäuseteil angeordnet sind, und daß die Verstellung von Preßwalze relativ zu Umlenkrolle durch das Anheben des Vordergehäuses oder das Absenken des Hintergehäuses erfolgt. Dadurch werden Koppelstangen und Schwenkmechanismen o. ä. vermieden, und die Parallelität der Umlenkwalzen bleibt während des Verstellens unverändert, was für einen einwandfreien Riemenlauf notwendig ist.

Weitere zweckmäßige Ausgestaltungen der Rundballenpresse nach der Erfindung ergeben sich aus den Unteransprüchen 1 bis 10.

Ein Ausführungsbeispiel der Erfindung ist in der nachfolgenden Beschreibung anhand der Zeichnung näher erläutert. Es zeigt
- Fig. 1: in Seitenansicht eine Rundballenpresse nach der Erfindung im Leerzustand,
- Fig. 2: eine Seitenansicht der Rundballenpresse gemäß Figur 1 mit einem sich im Preßraum befindlichen Rundballen mit minimalem Durchmesser,
- Fig. 3: eine Seitenansicht der Rundballenpresse gemäß Figur 1 nach Fertigstellung eines sich noch in der Rundballenpresse befindlichen Rundballens mit maximalem Ballendurchmesser und
- Fig. 4: eine vergrößerte Draufsicht auf eine erfindungsgemäße Schwenkarmanordnung.

Die Rundballenpresse besitzt ein zweiteiliges Pressengehäuse 1, bestehend aus einem Vordergehäuse 2, welches gestellfest auf einem Fahrgestell 3 ruht und einem Hintergehäuse 4, welches um eine obere Drehachse 5 zum Ballenausstoß in eine nicht gezeigte Entladestellung aufklappbar ist.

Das Vordergehäuse 2 weist in einem der Ballenbreite entsprechenden Abstand nebeneinander zwei vordere Seitenwände 6,7 auf, die durch nicht dargestellte Querverbindungen miteinander verbunden sind. Das Hintergehäuse 4 besitzt zwei hintere Seitenwände 8,9, die in gleichem Abstand wie die vorderen Seitenwände 6,7 angeordnet sind und in geschlossener Stellung 10 des Pressengehäuses 1 auf beiden Seiten jeweils mit ihrer Vorderkante 11 an den vorderen Seitenwänden 6,7 anliegen. Am Vordergehäuse 2 greift eine Zugdeichsel 12 an zur Verbindung mit einem nicht dargestellten Schlepper. Die Rundballenpresse ist über eine nicht dargestellte Gelenkwellenverbindung antriebsmäßig mit dem Schlepper zu koppeln.

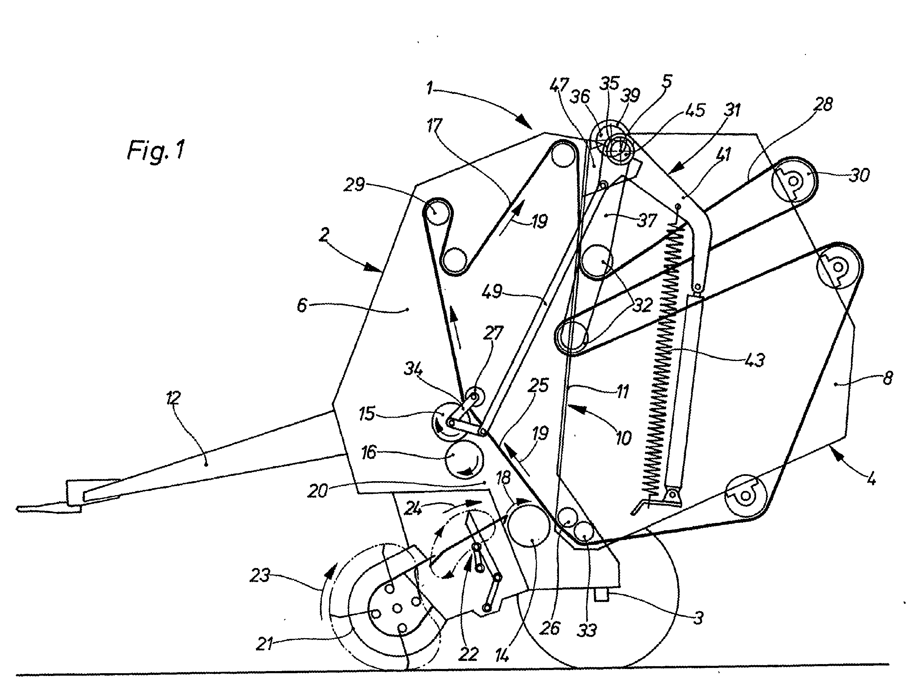

Im Pressengehäuse 1 wird ein Preßraum 13, dessen Durchmesser sich bei der Herstellung eines Ballens vergrößern kann, im wesentlichen von drei angetriebenen, im Vordergehäuse 2 ortsfest aber drehbar angeordneten Preßwalzen 14,15,16 und von einem Satz mehrerer nebeneinander, in jeweils einer gemeinsamen Ebene verlaufenden, endlosen Riemen 17 als Förder- und Preßbahn gebildet, welche im Leerzustand der Rundballenpresse auf nachstehend beschriebenen Führungen den in Figur 1 gezeigten Verlauf einnehmen. Die gemeinsame Umlaufrichtung der Preßwalzen 14,15,16 und der Riemen 17 ist durch Pfeile 18,19 gekennzeichnet.

Zwischen den beiden Preßwalzen 15,16 ist eine Zuführöffnung 20 freigelassen. Der Zuführöffnung 20 ist ein an sich bekannter Aufsammler 21 mit einem Zwischenförderer 22 vorgeschaltet, die beide während des Betriebes in durch Pfeile 23,24 gekennzeichnete Richtungen bewegt werden.

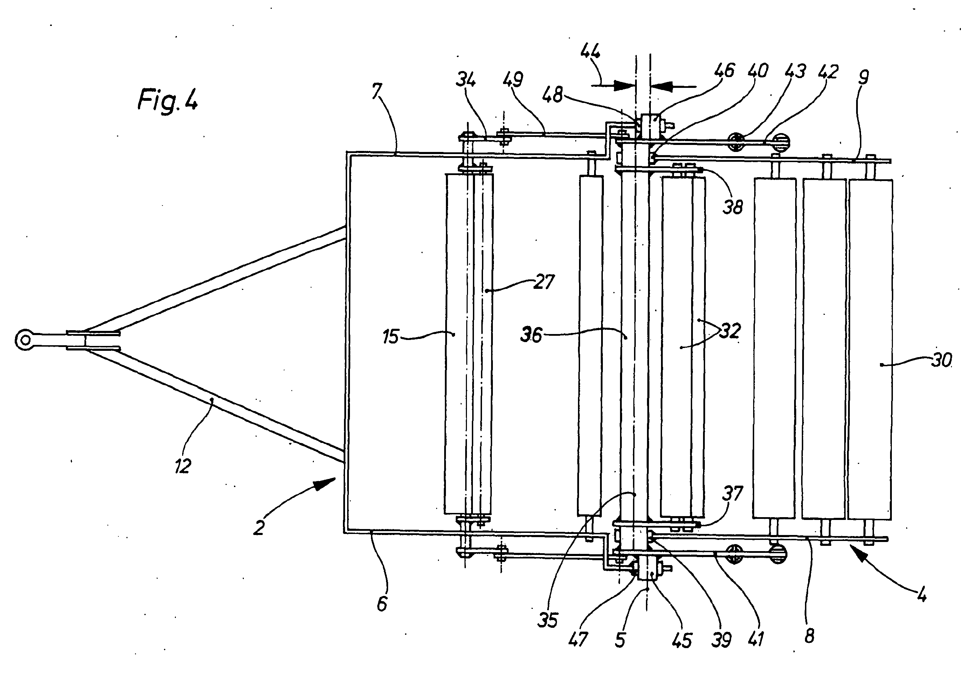

Wie am besten aus Figur 1 ersichtlich, wird ein den zu formenden Ballen berührender Riementrum 25 durch eine untere , im Hintergehäuse 4 drehbar aber ortsfest angeordnete Umlenkkrolle 26 und im Vordergehäuse 2 durch eine in kleinem Abstand parallel zur oberen Preßwalze 15 angeordnete Umlenkrolle 27 geführt, während ein dem Ballen abgewandter Riementrum 28 über je drei ortsfest aber drehbar angeordnete Rollen 29,30 im Vordergehäuse 2 und im Hintergehäuse 4 sowie zwei auf einer Schwenkarmanordnung 31 gelegene Spannrollen 32 läuft. Der unteren Umlenkrolle 26 ist in dichtem Abstand eine Abstreiferwalze 33 zugeordnet. Die obere Umlenkrolle 27 ist an Kurbelarmen 34 in den vorderen Seitenwänden 6,7 gelagert, wie z. B. in Figur 4 und 1 gezeigt.

Die Schwenkarmanordnung 31 hat, wie am besten aus Figur 4 ersichtlich, zwei Funktionen:
Einerseits weist sie in bekannter Weise Spannrollen 32 auf, um die bei wachsendem Ballen benötigten Ballenlängen durch Verschwenken der Schwenkarmanordnung 31 um eine Drehachse 5 unter Vorspannung freizugeben und andererseits ist das Hintergehäuse 4 an einer exzentrisch zur Drehachse 5 der Schwenkarmanordnung 31 versetzten, vom Querrohr 36 gebildeten Drehachse 35 schwenkbeweglich an der Schwenkarmanordnung 31 aufgehängt und gleichzeitig gesteuert, um beim Verschwenken der Spannrollen 32 automatisch eine optimale Zuordnung der Umlenkrollen 26,27 zu den Preßwalzen 14,15 zu erreichen.

Die ausgeführte Schwenkarmanordnung 31 läßt sich am besten anhand von Fig. 4 und Figur 1 beschreiben:
Ein Querrohr 36 weist innerhalb der hinteren Seitenwände 8,9 nach hinten gerichtete Arme 37,38 auf, die drehfest mit dem Querrohr 36 verbunden sind und zwei beabstandete Spannrollen 32 tragen. Das Querrohr 36 steht beidseitig nach außen über die hinteren Seitenwände 8,9 vor und ist an diesen mittels Lager 39,40 schwenkbeweglich geführt. An den freien Querrohrenden sind beidseitig außerhalb der Seitenwände 8,9 sich ebenfalls nach hinten erstreckende Arme 41,42 angeschweißt, an denen bekannte Riemenspanneinrichtungen, wie Federn 43 oder Hydrozylinder angreifen. Gegenüber der Drehachse 35 des Hintergehäuses 4 um einen Abstand 44 nach hinten versetzt ist an jedem Arm 41,42 ein nach außen vorstehender Lagerzapfen 45,46 angeschweißt, der in außerhalb der vorderen Seitenwände 6,7 angeordneten Lagerkonsolen 47,48 gelagert ist. Diese Lagerung bildet die Drehachse 5 für die Schwenkarmanordnung 31 und für das aufklappbare Hintergehäuse 4 in eine nicht gezeigte Entladestellung für den Ballen. Alternativ ist es in kinematischer Umkehr auch möglich, das Querrohr 36 durchgehend zu gestalten und das Hintergehäuse 4 an nach vom gerichteten, am Querrohr 36 befestigten Armen aufzuhängen.

Der Kurbelarm 34 der oberen, schwenkbeweglich angeordneten Umlenkrolle 26 ist über eine Koppelstange 49 mit der Schwenkarmanordnung 31 verbunden.

Alternativ können natürlich auf gleiche Art und Weise in kinematischer Umkehr die Preßwalzen 14,15 statt der Umlenkrollen 26,27 verschwenkt werden.

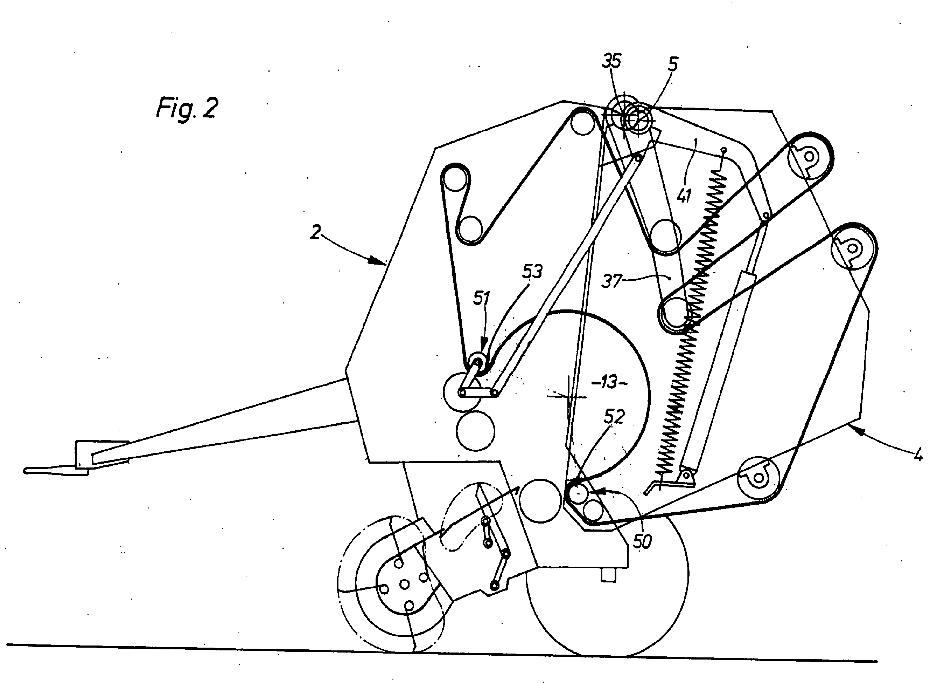

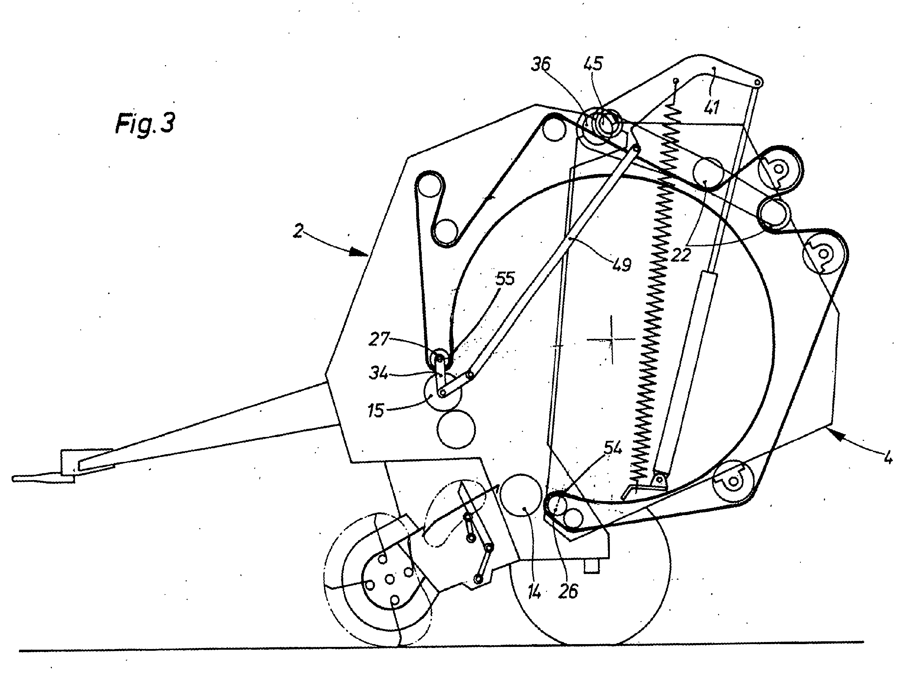

Die Funktion der Rundballenpresse ist wie folgt:
Vor Beginn des Ballenpreßvorganges nehmen alle Elemente eine Ausgangsstellung gemäß Fig. 1 ein.
Die Umlenkrolle 26 befindet sich etwa auf gleicher Höhe wie die Preßwalze 14 (Bodenwalze). Während der Gutszufuhr wird im Preßraum 13 ein Rundballen teppichförmig aufgerollt, wobei die Schwenkarmanordnung 31 entgegen dem Uhrzeigersinn verschwenkt und die benötigten Riemenlängen freigibt. Durch die exzentrische Aufhängung des Hintergehäuses 4 senkt sich das Hintergehäuse 4 beim Verschwenken entgegen dem Uhrzeigersinn, so daß die untere Umlenkrolle 26 gemeinsam mit der Abstreiferwalze 33 nach unten wandert, und die obere Umlenkrolle 27 mittels der Koppelstange 49 radial nach außen bewegt wird. Der Abstand der beiden Drehachsen 5,35 voneinander und die Auslegung der Kurbel- /Koppelstangenanordnung 34 / 49 sind so gewählt, dass die Berührungspunkte sowohl der Preßwalzen 14, 15 als auch der Umlenkrollen 26, 27 bei wachsenden Ballendurchmessem auf einem Zylindermantel liegen. Figur 2 zeigt die Positionen 50, 51 der Umlenkrollen 26, 27 bei minimalem und Figur 3 bei maximalem Ballendurchmesser mit jeweils eingezeichneten Berührungspunkten 52, 53, 54, 55. Nach ausgestoßenem Ballen gehen die Umlenkrollen 26,27 und die Schwenkarmanordnung 31 automatisch in Stellungen gemäß Figur 1.

## Patentansprüche

1. Rundballenpresse für landwirtschaftliches Erntegut mit einem in seiner Größe variablen, eine Zuführöffnung (20) aufweisenden Preßraum (13), welcher in axialer Richtung durch Seitenwände (6 bis 9) eines Pressengehäuses (1) und in radialer Richtung durch wenigstens eine über Rollen (26,27,29,30) geführte, flexible Förder- und Preßbahn (17) un wenigstens eine zu einer Umlenkrolle (26,27) benachbart angeordnete Preßwalze (14,15) begrenzt ist, mit einer Zuführvorrichtung (21) für Halmgut im Bereich der Zuführöffnung (20), wobei die Förder- und Preßbahn (17) mit zunehmendem Ballendurchmesser mittels einer im Pressengehäuse (1) gelagerten Schwenkarmanordnung (31) aus einer Startposition in eine Endposition ausweichbar und ein Pressen-Hintergehäuse (4) an einem Pressen-Vordergehäuse (2) in eine Entladestellung aufklappbar ist, **dadurch gekennzeichnet, daß** die radiale Position der Preßwalze (14,15) oder der Umlenkrolle (26,27) relativ zum Preßraum (13) in Abhängigkeit von der Bewegung der Schwenkarmanordnung (31) zwangsläufig verstellt wird.

2. Rundballenpresse nach Anspruch 1, **dadurch gekennzeichnet, daß** die untere Umlenkrolle (26) der Förder- und Preßbahn (17) mit größer werdendem Ballendurchmesser relativ zur benachbarten Preßwalze (14) von oben nach unten verstellt wird.

3. Rundballenpresse nach Anspruch 1 oder 2, **dadurch gekennzeichnet, daß** die oberhalb der Zuführöffnung (20) angeordnete Umlenkrolle (27) der Förder- und Preßbahn (17) mit größer werdendem Ballendurchmesser relativ zur Preßwalze (15) von innen nach außen verstellt wird.

4. Rundballenpresse nach Anspruch 2 oder 3, **dadurch gekennzeichnet, daß** anstelle einer Umlenkrolle (26,27) eine Preßwalze (14,15) in entsprechend entgegengesetzte Richtung verstellt wird.

5. Rundballenpresse nach einem der vorhergehenden Ansprüche, **dadurch gekennzeichnet, daß** die Verstellung von Preßwalze (14,15) oder Umlenkrolle (26,27) durch mechanische, elektrische und / oder hydraulische Mittel erfolgt, die in Wirkverbindung mit der Schwenkarmanordnung (31) stehen.

6. Rundballenpresse nach Anspruch 5, **dadurch gekennzeichnet, daß** die Mittel (6,34,35,39,40,49) Übertragungsgestänge, Hebel, Stellzylinder, Steuerscheiben, Steuernocken o. ä. sind.

7. Rundballenpresse nach Anspruch 1, **dadurch gekennzeichnet, daß** die Umlenkrolle (26) und die Preßwalze (14) ortsfest aber drehbar im jeweiligen Gehäuseteil (4, 2) angeordnet sind, und daß die Verstellung der Preßwalze (14) relativ zur Umlenkrolle (26) durch das Anheben des Vordergehäuses (2) oder das Absenken des Hintergehäuses (4) erfolgt.

8. Rundballenpresse nach Anspruch 7, **dadurch gekennzeichnet, daß** das aufklappbare Hintergehäuse (4) durch zwei achsparallel zueinander versetzte Drehachsen (5,35) mit dem Vordergehäuse (2) verbunden ist, welche von der Schwenkarmanordnung (31) gebildet werden.

9. Rundballenpresse nach Anspruch 8, **dadurch gekennzeichnet, daß** die Schwenkarmanordnung (31) je zwei gegeneinander versetzte Lager (39,45,47) aufweist, wobei ein Lager (39) dem einen (4) und das andere Lager (45) dem anderen Gehäuseteil (2) zugeordnet ist.

10. Rundballenpresse nach Anspruch 8 oder 9, **dadurch gekennzeichnet, daß** das Hintergehäuse (4) gemeinsam mit der Schwenkarmanordnung (31) um die im Vordergehäuse (2) angeordnete Drehachse (5) aufklappbar ist, wobei die Schwenkarmanordnung (31) innerhalb der Seitenwände (8,9) des Pressengehäuses (1) wenigstens eine gegenüber der Drehachse (5) nach hinten versetzte Spannrolle (32) für die Förder- und Preßbahn (17) und außerhalb des Pressengehäuses (1) Arme (41,42) aufweist, an denen eine Spanneinrichtung (43) für die Förder- und Preßbahn (17) angreift.

## Claims

1. Round baler for agricultural crop, having a pressing chamber (13) which is variable in size and has a feed aperture (20), and which is defined in the axial direction by side walls (6 to 9) of a baler housing (1) and in the radial direction by at least one flexible conveying and pressing belt (17) passing over pulleys (26, 27, 29, 30) and by at least one pressing roller (14, 15) disposed adjacent to a deflection pulley (26, 27), having a feed device (21) for crop stems in the region of the feed aperture (20), the conveying and pressing belt (17) being deflectable as the bale diameter increases from a starting position into and end position by means of a pivot arm arrangement (31) mounted in the baler housing (1), and wherein a baler rear housing (4) on a baler front housing (2) is extensible into a discharge position, **characterised in that** the radial position of the pressing roller (14, 15) or of the deflection pulley (26, 27) is displaced in a constrained manner relative to the pressing chamber (13) according to the movement of the pivot arm arrangement (31).

2. Round baler according to claim 1, **characterised in that** the lower deflection pulley (26) of the conveying and pressing belt (17) is displaced from top to bottom relative to the adjacent pressing roller (14) as the bale diameter increases.

3. Round baler according to claim 1 or 2, **characterised in that** the deflection pulley (27), of the conveying and pressing belt (17), disposed above the feed aperture (20) is displaced from the inside out relative to the pressing roller (15) as the bale diameter increases.

4. Round baler according to claim 2 or 3, **characterised in that** instead of a deflecting pulley (26, 27) a pressing roller (14, 15) is displaced in the correspondingly opposite direction.

5. Round baler according to one of the preceding claims, **characterised in that** the displacement of the pressing roller (14, 15) or deflecting pulley (26, 27) is effected by mechanical, electrical and/or hydraulic means, which are in active communication with the pivot arm arrangement (31).

6. Round baler according to claim 5, **characterised in that** the means (6, 34, 35, 39, 40, 49) are transmission linkages, levers, actuating cylinders, disc cams, radial cams or the like.

7. Round baler according to claim 1, **characterised in that** the deflection pulley (26) and the pressing roller (14) are mounted fixedly but rotatably in the respective housing part (4, 2), and **in that** the displacement of the pressing roller (14) relative to the deflection pulley (26) is effected by raising the front housing (2) or lowering the rear housing (4).

8. Round baler according to claim 7, **characterised in that** the extensible rear housing (4) is connected by two axially parallel offset pivotal axes (3, 35) to the front housing (2), which are formed by the pivot arm arrangement (31).

9. Round baler according to claim 8, **characterised in that** the pivot arm arrangement (31) has two mutually offset bearings (39, 45, 47), one bearing (39) being allocated to the one housing part (4) and the other bearing (45) to the other housing part (2).

10. Round baler according to claim 8 or 9, **characterised in that** the rear housing (4) may be extended together with the pivot arm arrangement (31) about the pivotal axis (5) disposed in the front housing (2), the pivot arm arrangement (31) having inside the side walls (8, 9) of the baler housing (1) at least one tensioning pulley (32), offset to the rear with respect to the pivotal axis (5), for the conveying and pressing belt (17) and arms (41, 42) outside the baler housing (1), on which arms the tensioning device (43) for the conveying and pressing belt (17) acts.

## Revendications

1. Presse à balles rondes pour des produits de récolte agricoles, comportant une chambre de compression (13) de taille variable présentant une ouverture d'alimentation (20), laquelle chambre est délimitée en direction axiale par des parois latérales (6 à 9) d'un carter de presse (1) et en direction radiale par au moins une bande de transport et de compression flexible (17) guidée par l'intermédiaire de poulies (26, 27, 29, 30), et par au moins un rouleau de compression (14, 15) disposé à proximité d'une poulie de renvoi (26,27), comportant un dispositif d'alimentation (21) en produit à tige dans la zone de l'ouverture d'alimentation (20), la bande de transport et de compression (17) pouvant être déviée, lorsque le diamètre de la balle s'agrandit, hors d'une position de départ dans une position finale par un système de bras articulés (31) monté dans le carter de presse (1), et un carter de presse arrière (4) étant rabattable sur un carter de presse avant (2) dans une position de déchargement, **caractérisée en ce que** la position radiale du rouleau de compression (14, 15) ou de la poulie de renvoi (26, 27) par rapport à la chambre de compression (13) est obligatoirement déplacée en fonction du mouvement du système de bras articulés (31).

2. Presse à balles rondes selon la revendication 1, **caractérisée en ce que** la poulie de renvoi inférieure (26) de la bande de transport et de compression (17) peut être déplacée du haut vers le bas par rapport au rouleau de compression adjacent (14) à mesure que le diamètre de la balle s'agrandit.

3. Presse à balles rondes selon la revendication 1 ou 2, **caractérisée en ce que** la poulie de renvoi (27) de la bande de transport et de compression (17) disposée au-dessus de l'ouverture d'alimentation (20) est déplacée de l'intérieur vers l'extérieur par rapport au rouleau de compression (15) à mesure que le diamètre de la balle s'agrandit.

4. Presse à balles rondes selon la revendication 2 ou 3, **caractérisée en ce qu'**à la place de la poulie de renvoi (26, 27), un rouleau de compression (14, 15) est déplacé dans la direction opposée correspondante.

5. Presse à balles rondes selon une des revendications précédentes, **caractérisée en ce que** le déplacement du rouleau de compression (14, 15) ou de la poulie de renvoi (26, 27) est assuré par des moyens mécaniques, électriques et/ou hydrauliques, qui sont en relation active avec le système de bras articulés (31).

6. Presse à balles rondes selon la revendication 5, **caractérisée en ce que** les moyens (6, 34, 35, 39, 40, 49) sont des bielles, des leviers, des vérins de réglage, des disques de commande, des cames de commande, ou autres.

7. Presse à balles rondes selon la revendication 1, **caractérisée en ce que** la poulie de renvoi (26) et le rouleau de compression (14) sont disposés de manière stationnaire mais rotative dans chaque partie de carter (2, 4), et **en ce que** le déplacement du rouleau de compression (14) par rapport à la poulie de renvoi (26) est assuré par le soulèvement du carter avant (2) ou l'abaissement du carter arrière (4).

8. Presse à balles rondes selon la revendication 7, **caractérisée en ce que** le carter arrière rabattable (4) est relié au carter avant (2) par deux axes (5, 35) décalés l'un par rapport à l'autre parallèlement à l'axe, qui sont formés par le système de bras articulés (31).

9. Presse à balles rondes selon la revendication 8, **caractérisée en ce que** le système de bras articulés (31) présente dans chaque cas deux paliers décalés l'un par rapport à l'autre, un palier (39) étant disposé dans une partie (4) et l'autre palier (45) dans l'autre partie (2) du carter.

10. Presse à balles rondes selon la revendication 8 ou 9, **caractérisée en ce que** la carter arrière (4) est rabattable avec le système de bras articulés (31) autour de l'axe de rotation (5) disposé dans le carter avant (2), le système de bras articulés (31) présentant à l'intérieur des parois latérales (8, 9) du carter de presse (1) au moins un rouleau tendeur (32) de la bande de transport et de compression (17) décalé vers l'arrière par rapport à l'axe de rotation (5), et à l'extérieur du carter de presse (1) des bras (41, 42) sur lesquels s'accroche un dispositif de tension (43) de la bande de transport et de compression (17).
